# EUROPÄISCHE PATENTSCHRIFT

(11) **EP 0 498 402 B1**
(45) Veröffentlichungstag und Bekanntmachung des Hinweises auf die Patenterteilung: **03.01.1996**
(21) Anmeldenummer: 92101919.6
(22) Anmeldetag: 05.02.1992
(51) Int. Cl.: H01R 25/16

(54) **Abdeckung für eine Elektrodose oder eine Elektrodosenkombination**
Cover for electrical socket or socket combination
Couverture pour une prise électrique ou une combinaison de prises électriques

(30) Priorität: 05.02.1991 FI 910559
(43) Veröffentlichungstag der Anmeldung: 12.08.1992
(73) Patentinhaber: A. AHLSTROM CORPORATION, FIN-29600 Noormarkku (FI)
(72) Erfinder: Seger, Leif, FI-07920 Lovisa 4 (FI)
(74) Vertreter: Füchsle, Klaus, Dipl.-Ing.

(56) Entgegenhaltungen:
- DE-A- 3 610 117
- DE-A- 3 643 559

## Beschreibung

Diese Erfindung betrifft eine Abdeckung für eine Elektrodose oder eine Elektrodosenkombination, die zumindest aus einer an einer Wand oder in einem Elektrokanal mekanisch fixierten Elektrodose, wie etwa einer Einbaudose, Steckdose oder d.gl. besteht.

Unter Elektrokanal versteht man hier an der Wand installierbare, in der Regel aus einem U-förmigen Grundprofil auf verschiedene Weisen modifizierte rinnenförmige Kanäle, in denen Kanal-Elektrodosen installiert werden können. Unter Kanal-Elektrodose versteht man hier verschiedene in einem Elektrokanal installierbare Installationsgeräte und Vorrichtungen, wie z.B. Kanalsteckdosen, Schalter, Meßgeräte, Anschlußklemmen für Tele-, Telefon- und Datenübertragungsverbindungen und anderes ähnliches Elektrozubehör. Unter Kanal-Einbaudose versteht man hier eine in einem Elektrokanal installierbare Schutzdose, in der wiederum verschiedene obengenannte Installation geräte und Vorrichtungen installiert werden können.

Die Ränder des offenen Teils des Elektrokanals sind zum Inneren des Elektrokanals hin gebogen und derart ausgestaltet, daß sie als Anlageflächen für die Befestigungsorgane der im Elektrokanal zu installierenden Kanal-Elektrodosen funktionieren und einerseits das Hineindringen von Kanal-Elektrodosen in den Elektrokanal und anderseits deren versehentliches Lösen vom Elektrokanal verhindern. Diejenigen Bereiche des Elektrokanals, wo sich keine Kanal-Elektrodosen befinden, werden mittels passend abgelängter blinder Frontplatten verdeckt, deren Querprofil derartig geformt ist, daß sie sich leicht, z.B. durch Drücken am Elektrokanal befestigt werden können. Von den im Elektrokanal installierten Kanal-Elektrodosen sind somit nur die Ausgänge nach außen sichtbar. Sämtliche Leitungen und sonstiges Installationsmaterial sind unsichtbar im Inneren des Elektrokanals.

Die an der Wand installierbaren Elektrodosen lassen sich z.B. in Aufputz-Einbaudosen oder Inputz-Einbaudosen installieren.

Die Abdeckung einer in einem Elektrokanal oder an einer Wand installierten Elektrodosenkombination ist oft ein getrennter Rahmen, der so viele Ausschnitte aufweist, wie die Elektrodosenkombination aus der Wand oder aus dem Elektrokanal herausgeführte Ausgangskombinationen hat. So kann z.B. eine Doppelsteckdose ein eigenes Ganzes bilden, wofür die Abdeckung einen größeren Ausschnitt hat. Ebenfalls kann eine einzelne Steckdose, Telefonbuchse, Stecker eines Koaxialkabels, Schalter, Uhr oder jeder beliebige Teil einer Elektrodosenkombination eine Abdeckung für seinen Ausschnitt erfordern. Je mehr verschieden große Ausschnitte voraussetzende Installationsgeräte die einzelnen Kanal-Elektrodosenkombinationen aufweisen, desto zahlreicher werden die verschiedenen Kombinationsmöglichkeiten der Abdeckungen. Man soll auch die durch verschiedene Farbalternativen bedingte Vermehrung der Abdeckungungsauswahl nicht vergessen. Oft sind jedoch sämtliche Schutzdosen einer Elektrodosenkombination gleich groß, wobei in der Abdeckung für die durch die darin installierten verschiedenen Installationsgeräte gebildete Elektrodosenkombination lediglich Öffnungen einer Größe benötigt werden. Hierbei kann die Installation mit relativ wenigen verschiedenen Teilen erfolgen. Es können ja dann einander im übrigen ähnliche, aber in hinsicht auf die Anzahl der Ausschnitte variierende Abdeckungen mit 1, 2 usw. Ausschnitten benutzt werden, wovon dann jeweils eine Abdeckung gewählt wird, die der Ausschnittsanzahl der jeweiligen Elektrodosenkombination entspricht. Wenn Abdeckungen des obigen Typs mit Standard-Ausschnitten verwendet werden, sollen davon jedoch mehrere Größen- und Farbalternativen auf Lager gehalten werden. Nach der Veröffentlichung DE 36 43 559 ist es auch bekannt, getrennte Seiten- und Endstücke zur Befestigung der Schutzdose im Elektrokanal einzusetzen und um gleichzeitig eine Abdeckung für die betreffende Schutzdose zu bilden. Dabei wird jede Seite der Elektrodose durch Abdeckungsteile getrennt verdeckt, wie es sich aus der erwähnten Publikation erkennen läßt. Es ist auch bekannt, für jede Schutzdose, oder für jedes in der Schutzdose installierte Installationsgerät oder jede Vorrichtung eine eigene getrennte, durch Drücken an der Schutzdose befestigbare Abdekkung zu benutzen.

Sämtliche obengenannten Lösungen werden jedoch dadurch gekennzeichnet, daß entweder zahlreiche verschiedene Teile benötigt werden, aus denen die Abdeckung gebildet wird, oder aber eine große Anzahl in Form, Größe und Farbe variierende komplette Abdeckungen oder eine einzelne Abdeckung für jedes Installationsgerät oder jede Schutzdose benötigt werden.

Bei den bekannten Lösungen entstehen leicht Probleme mit den in Elektrokanälen installierbaren z.B. Steckdosen- oder entsprechenden Kanal-Elektrodosenkombinationen, wenn die im Elektrokanal befindliche Kanal-Elektrodosenkombination nachgerüstet oder verändert werden soll, denn alle Kanal-Elektrodosen einer Kanal-Elektrodosenkombination sollen zwecks Einbau einer neuen Abdeckung dabei mindestens teilweise geöffnet werden. Wenn getrennte Teile oder für jede Schutzdose oder darin installiertes Installationsgerät eine getrennte, lediglich durch Drücken anbringbare Abdeckung verwendet wird, wird natürlich weniger Mehrarbeit und eine kleinere Anzahl Zusatzteile benötigt.

In der DE-A-36 43 559 ist eine in einem Brüstungskanal befestigbare Einbaudose offenbart. An der frontseitig offenen Einbaudose, und zwar mündungsseitig sind zwei einander entgegengerichtete Halter vorgesehen, deren Endteile in beiderseits einer Rinne des Brüstungskanals angeordneten Nuten eingreifen. Zur Abdeckung der Frontseite der Einbaudose sind entweder eine einteilige Blende oder vier Leisten vorgesehen, die die vier Seiten der Einbaudose abdecken.

Durch die vorliegende Erfindung soll eine Elektrodosenkombination geschaffen werden, die nebst ihrer völlig neuen Eigenschaften u.a. auch eine Verbesserung der obengenannten bekannten Lösungen und eine Antwort auf die oben angeführten, sich beim Nachrüsten erhebenden Probleme darstellt. Diese Aufgabe wird erfindungsgemäß durch eine Aubenabdeckung gemäß Anspruch 1 gelöst.

Die Erfindung betrifft eine Abdeckung für eine aus einer oder mehreren Elektrodosen zusammengesetzte, in einem Elektrokanal oder an der Wand installierbare Elektrodosenkombination, welche Abdeckung einfach gebildet und ohne Werkzeug sauber angebracht werden kann. Zur Bildung einer erfindungsgemäßen Abdeckung werden lose Teile eines einzigen Typs benötigt.

Der Zweck dieser Erfindung wird durch eine Elektrodosenkombination erreicht, bei der als Flanken der Abdeckung der von einer Elektrodose oder benachbarten Elektrodosen gebildete Rand dient.

Bei der erfindungsgemäßen Lösung läßt sich die Abdeckung einer in einem Elektrokanal oder an einer Wand installierten Elektrodosenkombination derart bilden, daß als Flanken der Abdeckung die durch eine Elektrodose oder benachbarte Elektrodosen gebildete Rand dient.

Nachfolgend wird detailliert beschrieben, wie sich die Abdekkung z.B. für eine in einem Elektrokanal installierte Kanal-Elektrodosenkombination bilden läßt. Durch die gleichzeitig mit dieser Anmeldung eingereichten Patentanmeldung EP-A- 0 498 405 mit dem Namen "Elektrischer Anschluß einer Kanal-Elektrodosenkombination", die denselben Erfinder hat wie diese Erfindung, ist die mechanische Kuppelung der Teile einer im Elektrokanal installierbaren Kanal-Elektrodosenkombination einerseits mit dem Elektrokanal und anderseits mit den anderen Teilen der Kanal-Elektrodosenkombination auf eine an sich bekannte Weise ausführlicher erläutert und beschrieben.

Die Erfindung wird im folgenden anhand von einigen erfindungs-gemäßen Anwendungsbeispielen, nämlich einer aus drei KanalEinbaudosen zusammengesetzten Kanal-Elektrodosenkombination und einer aus zwei Doppel-Schutzkontakt-Sicherheits-Kanal-steckdosen und einem getrennten Anschlußteil bestehenden Kanal-Elektrodosenkombination ausführlicher beschrieben, wobei auf die beigefügten Zeichnungen verwiesen wird. Es zeigt dabei
Fig. 1a eine Einbaudose in Draufsicht,
Fig. 1b eine Einbaudose in Seitenansicht,
Fig. 2 schematisch einen einfachen Elektrokanal, in dem eine aus drei Einbaudosen zusammengesetzte Kanal-Elektrodosenkombination , mit Abdeckung, und ohne in der Einbaudose zu installierende Installationsgeräte, fertig eingesetzt ist,
Fig. 3a eine Kopfleiste in Draufsicht,

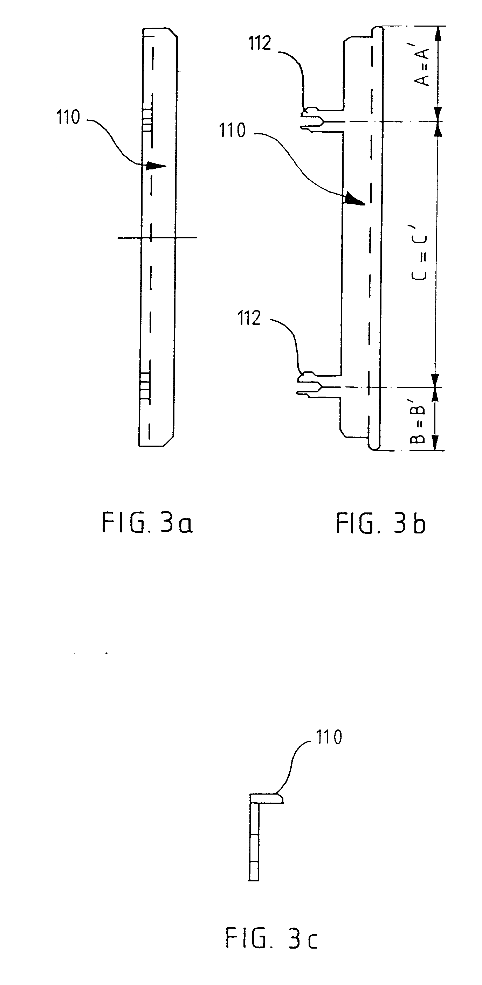

Fig. 3a die Kopfleiste aus Fig. 3a in Seitenansicht,
Fig. 3c die Kopfleiste aus Fig. 3a von der Kopfseite gesehen,

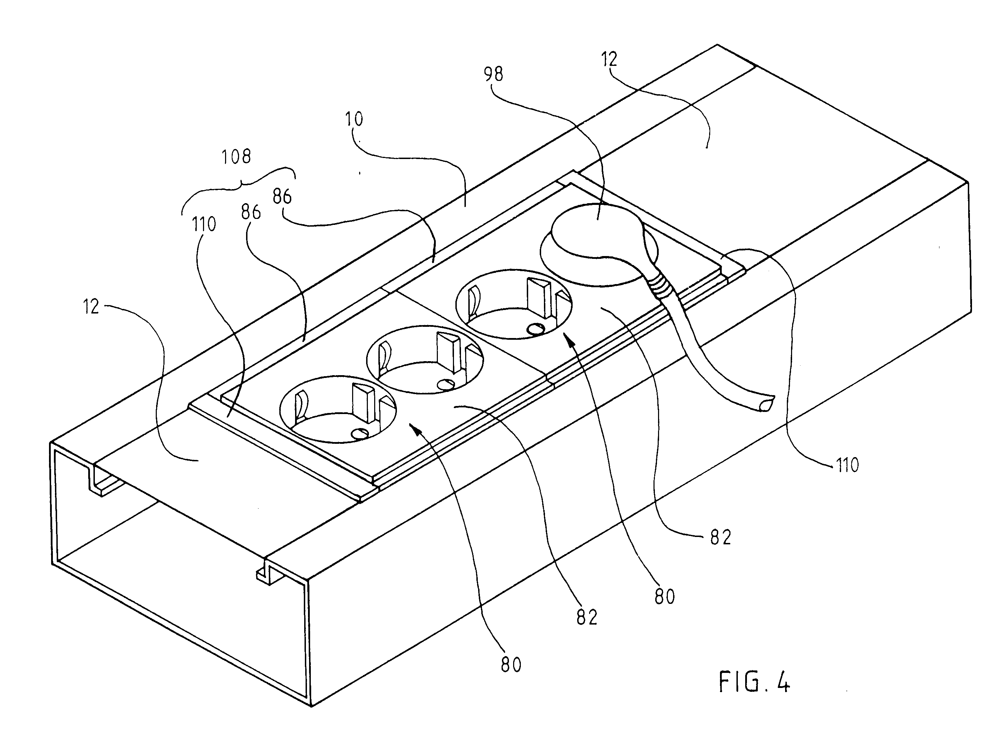

Fig. 4 schematisch einen einfachen Elektrokanal, wo ein aus zwei Doppel-Schutzkontankt-Sicherheits-Kanalsteckdosen bestehende Kanal-Elektrodosenkombination installiert ist. In der einen Schutzkontakt-Sicherheits-Kanalsteckdose ist ein schutzgeerdeter Winkelstecker eingesetzt,

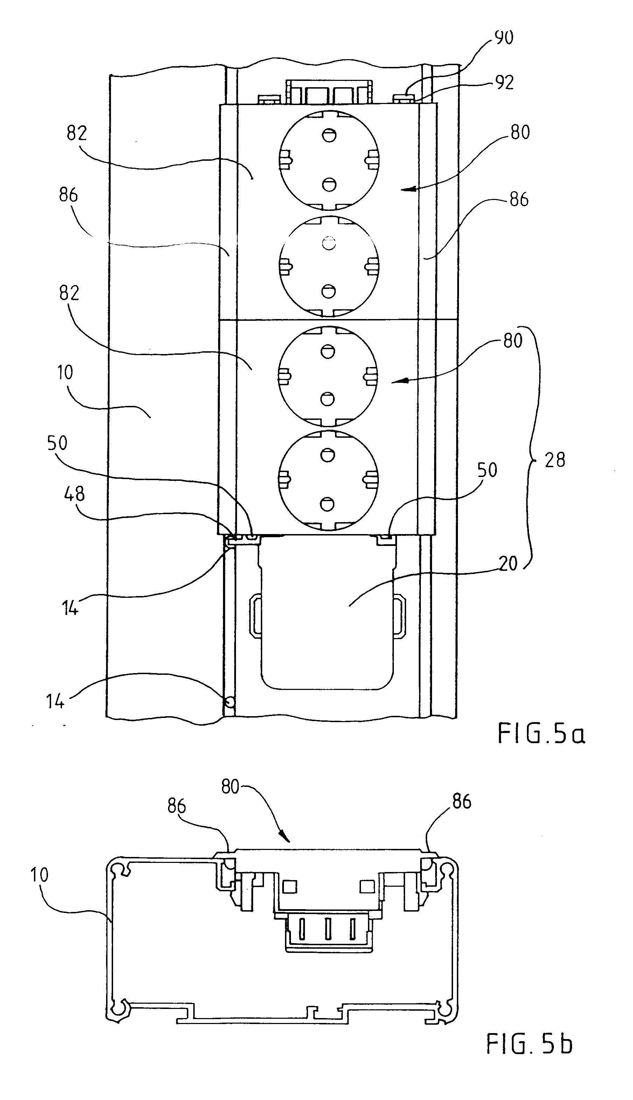

Fig. 5a in Draufsicht die Kanal-Steckdosenkombination aus Fig. 4 im Elektrokanal eingebaut, ohne Frontplatten des Elektrokanals, Schutzdeckel des Anschlußteils, Kopfleisten und Winkelstecker,
Fig. 5b eine im Elektrokanal installierte Kanalsteckdose von der Stirnseite des Elektrokanals gesehen.

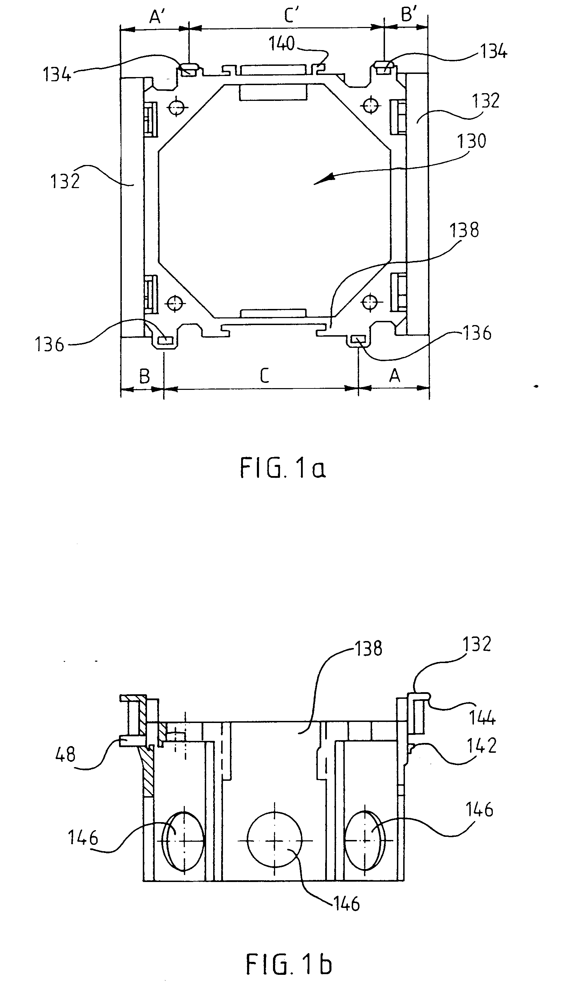

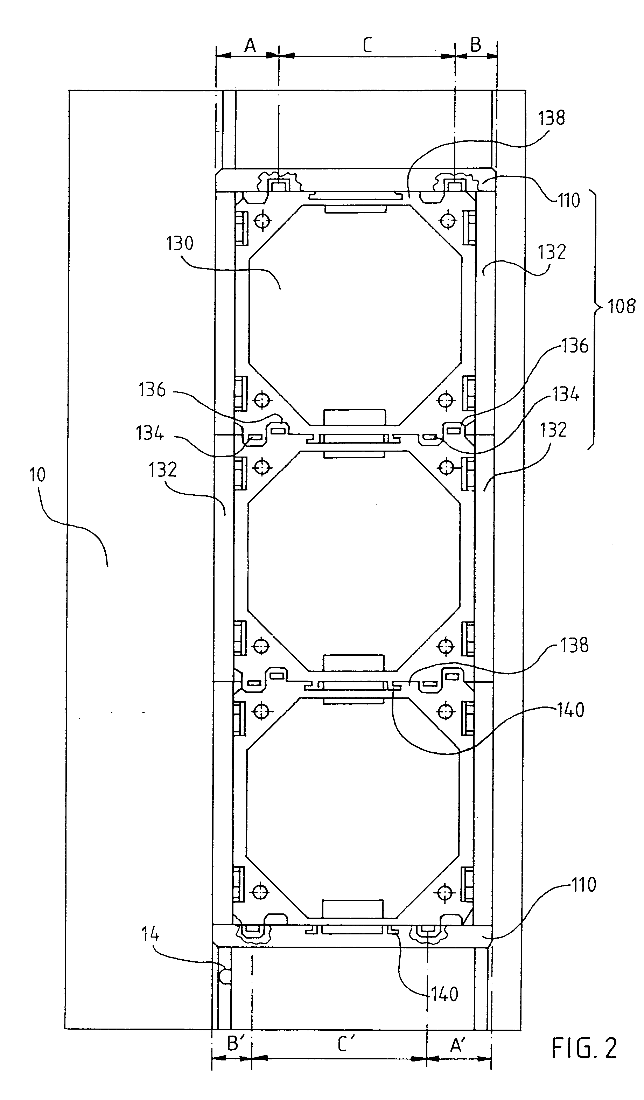

In Fig. 1 und 2 ist eine im Elektrokanal installierbare Kanal-Einbaudose 130 und eine aus drei im Elektrokanal installierten Kanal-Einbaudosen zusammengesetzte Kanal-Elektrodosenkombination dargestellt. Die Kopfleisten 110 und die zum Elektrokanal parallelen Ränder 132 der Kanal-Einbaudosen 130 bilden zusammen die Abdeckung 108 für die in diesen Beispiel beschriebene aus Kanal-Einbaudosen zusammengesetzte Kanal-Elektrodosenkombination. In der Kanal-Einbaudose 130 können verschiedene Installationsgeräte und Vorrichtungen installiert werden, wie Steckdosen, Schalter, Anschlußklemmen für Tele-, Telefon und Datenübertragungsverbindungen und andere ähnliche Elektroausstattung. Die Kanal-Einbaudose 130 besteht aus einer Umrandung 132, Befestigungsorganen 134 und 136 für die Kopfleiste, Befestigungsorganen 138 und 140, womit benachbarte Schutzdosen aneinander befestigt werden, Befestigungsorgan 142 und Anlagefläche 144, über die die Schutzdosen im Elektrokanal befestigt werden, Halteglied 48, mit dem Bewegung der Kanal-Einbaudose in Richtung des Elektrokanals verhindert wird, sowie Sollbruchstellen 146 zur Einführung der von in der Kanal-Einbaudose zu installierenden Installationsgeräten oder Vorrichtungen benötigten Elektrokabeln.

Die Kanal-Einbaudosen 130 weisen an sich bekannte Befestigungsorgane 138 und 140 zur Befestigung von Kanal-Einbaudosen aneinanderauf. Die Kanal-Einbaudose 130 umfaßt auch als solche bekannte Befestigungsorgane 142 zu deren Befestigung im Elektrokanal 10. Die Anlagefläche 144 verhindert, daß die Kanal-Einbaudose zu tief in den Elektrokanal hineintaucht. Beim Ankuppeln von Kanal-Einbaudosen 130 miteinander über die Befestigungsorgane 138 und 140 greifen die Befestigungsorgane 134 und 136 der Kopfleisten 110 derart ineinander, daß der Abstand C der Befestigungsorgane 136 voneinander an einem Ende der Kanal-Einbaudose 130 der gleiche ist, wie der Abstand C' der Befestigungsorgane 134 voneinander am anderen Ende der Kanal-Einbaudose 130. Bei einer solchen Verbindung werden die benachbarten Kanal-Einbaudosen lückenlos aneinandergereiht, und es entstehen keine störenden Lücken zwischen den hintereinander liegenden Kanten 132.

An den einwärts gebogenen Kanten des Elektrokanals 10 können Haltenuten 14 bearbeitet werden. An Teilen der Kanal-Elektrodosenkombination, z.B. an Kanal-Einbaudosen kann entsprechend ein Halteteil 48 angeordnet werden, der in eine der obengenannten Haltenuten 14 eingreift und dadurch verhindert, daß sich die betreffende Kanal-Elektrodose und die anderen damit gekuppelten Kanal-Elektrodosen im Elektrokanal in seiner Längserstreckung bewegen.

Nachdem in den in Fig. 2 gezeigten im Elektrokanal installierten Kanal-Einbaudosen die gewünschten Installationsgeräte installiert sind, wird an den Kanal-Einbaudosen als oberstes die ein jedem Installationsgerät zugeordnete Zentralplatte (nicht eingezeichnet) befestigt, die die Installation in dieser Hinsicht vervollständigt. Die als letzte eingesetzten Kopfleisten 110 bilden mit den dicht aneinandergereihten Rändern 132 die Abdeckung 108 für diese, aus Kanal-Einbaudosen zusammengesetzte Kanal-Elektrodosenkombination.

Die in Fig. 3 dargestellte Kopfleiste 110 bildet ihrer Bezeichnung gemäß das Kopfteil der Abdeckung 108 der Kanal-Elektrodosenkombination. Die Kopfleisten 110 lassen sich ohne Werkzeuge, mit geeigneten, als solche bekannten bevorzugt männlichen Befestigungsorganen 112 befestigen und leicht, z.B. mit der Hand lösen. Beim Ankuppeln von z.B. Kanal-Einbaudosen 130 über Befestigungsorgane 138 und 140 miteinander, greifen die Befestigungsorgane 134 und 136 der Kopfleisten 110 derart ineinander, daß der Abstand C der Befestigungsorgane 136 der Kopfleiste 110 an einem Ende der Kanal-Einbaudose 130 der gleiche ist wie der Abstand C' der Befestigungsorgane 134 der Kopfleiste 110 am anderen Ende der Kanal-Einbaudose. Um bei einer auf die obige Weise aus aneinandergereihten Kanal-Einbaudosen gebildeten Kanal-Elektrodosenkombination mit nur einem Typ von Kopfleisten 110 auszukommen, soll der Abstand A des Befestigungsorgans 136 vom Rand der Kanal-Einbaudose der gleiche sein wie der Abstand A' des Befestigungsorgans 134 vom Rand der Kanal-Einbaudose. Entsprechend soll der Abstand B des Befestigungsorgans 136 vom Rand der Kanal-Einbaudose dem Abstand B' des Befestigungsorgans 134 vom Rand der Kanal-Einbaudose entsprechen. Bei der Kopfleiste 110 gilt somit A=A' und B=B' sowie C=C'. Die Kopfleisten sind also derart gestaltet, daß zur Bildung der Abdeckung 108 für die Kanal-Elektrodosenkombination lose Teile eines einzigen Typs, d.h. Kopfleisten 110 benötigt werden, die der Elektroinstallateur leicht, z.B. in der Brusttasche mitführen kann.

Der in Fig. 4 dargestellte an der Wand installierbare Elektrokanal 10 wird nach Bedarf waagerecht, bevorzugt unmittelbar unterhalb der Fensterebene, oder senkrecht montiert. Im Elektrokanal 10 ist eine Kanal-Elektrodosenkombination installiert, die sich aus Kanal-Elektrodosen, in diesem Fall also aus zwei Doppel-Schutzkontakt-Sicherheits-Kanalsteckdosen 80 und einem Anschlußteil 20 (nicht sichtbar, in Fig. 5a dargestellt) zusammensetzt. Die Teile der im Elektrokanal 10 installierten Kanal-Elektrodosenkombination, also der Anschlußteil 20 und die Kanal-Steckdosen 80, sind z.B. mit den in Patentanmeldung EP-A-0 498 405 erwähnten, an sich bekannten Weisen mechanisch miteinander gekuppelt. An den Kopfseiten der Kanal-Steckdosen 80 sind die Kopfleisten 110 angebracht.

Die Kopfleisten 110 und die zur Geräteblende 82 parallelen Ränder 86 der Kanal-Steckdosen 80 bilden zusammen die in diesem Beispiel beschriebene Abdeckung 108 der aus Kanal-Steckdosen zusammengesetzten Kanal-Elektrodosenkombination. Diejenigen Bereiche des Elektrokanals 10, wo sich keine Kanal-Elektrodosen befinden, werden mit passend abgelängten blinden Frontplatten 12 verdeckt, die in Querprofil derart geformt sind, daß sie z.B. durch Drücken am Elektrokanal befestigt werden können. Von den im Elektrokanal installierten Kanal-Elektrodosen sind somit nur die Ausgänge nach außen sichtbar. Sämtliche Leitungen und sonstiges Installationsmaterial sind unsichtbar im Inneren des Elektrokanals. Mit der einen Kanal-Steckdose 80 ist ein Winkelstecker 98 gekuppelt.

In Fig. 5a ist eine Kanal-Elektrodosenkombination gemäß Fig. 4 in einem Elektrokanal 10 installiert, ohne Frontplatten 12 des Elektrokanals und Kopfleisten 110 dargestellt. Zu dieser Kanal-Elektrodosenkombination gehören zwei Kanal-Steckdosen 80 und ein Anschlußteil 20. Der eine der einwärts gebogenen Ränder des Elektrokanals weist im unterhalb der Frontplatte zu liegen kommenden Teil Haltenuten 14 auf. In den Teilen der Kanal-Elektrodosen, in diesem Fall im Anschlußteil 20, läßt sich wiederum ein Halteglied 48 anordnen, das in eine der genannten Haltenuten 14 eingreift und dadurch verhindert, daß sich der betreffende Teil der Kanal-Elektrodosenkombination und die übrigen damit verbundenen Teile der Kanal-Elektrodosenkombination in der Längserstreckung des Elektrokanals bewegen.

Fig. 5b zeigt eine im Elektrokanal 10 installierte Kanal-Steckdose von der Kopfseite des Elektrokanals gesehen. In dieser Fig. ist die Position der Ränder 86 der Geräteblende 82 gegenüber der übrigen Oberfläche deutlich erkennbar. Die auf dem Elektrokanal 10 aufliegenden Ränder 86 der Geräteblende 82 befinden sich gegenüber der übrigen Oberfläche der Geräteblende 82 auf unterschiedlicher Höhe und bilden somit einen Teil des seitlichen Randes der Abdeckung des Kanal-Elektrodosenkombination. Die Geräteblende ist ein fester Bestandteil der Kanal-Steckdose 80. Aus dieser Fig. ist auch die Lage der Haltenuten 14 in dem einen unterhalb der Frontplatte 12 liegenden, einwärts gebogenen Rand des Elektrokanals 10 sichtbar. An den Befestigungsorganen 90 und 50 lassen sich die das Ende der Abdeckung der Kanal-Steckdosenkombination bildenden Kopfleisten 110 befestigen.

Die im Elektrokanal installierbare Kanal-Elektrodosenkombination läßt sich bilden aus einem getrennten Anschlußteil 20 + mindestens einer Kanal-Elektrodose 80 oder einem zu einer Kanal-Elektrodose fest gehörenden Anschlußteil 28 und den damit eventuell gekuppelten Kanal-Elektrodosen 80. Somit befinden sich an dem einen Ende sämtlicher Kanal-Elektrodosenkombinationen gemäß diesem Beispiel den Befestigungsorganen 90 ähnliche Befestigungsorgane und am anderen Ende den Befestigungsorganen 50 ähnliche Befestigungsorgane. Wie früher bereits beschrieben wurde, versteht man unter Kanal-Elektrodose zahlreiche alternative in einem Elektronakal installierbare Elektrozubehörteile,wie etwa Kanal-Steckdosen, diverse Installationsgeräte und Vorrichtungen ohne getrennte Schutzdose, diverse in Kanal-Einbaudosen eingesetzte Installationsgeräte und Vorrichtungen, wie Steckdosen, Schalter, Anschlußklemmen für Tele-, Telefon- und Datenübertragungsverbindungen und anderes Elektrozubehör dieser Art.

Wenn die Kanal-Elektrodosenkombination gemäß dem Beispiel, bestehend allein aus dem Anschlußteil 20 + Kanal-Steckdosen 80, im Elektrokanal 10 installiert ist, bilden die seitlichen Ränder des aus dem Elektrokanal hervorspringenden Teils der Kanal-Steckdose, der Geräteblende 82, ihren Teil von der Flanke der Abdeckung 108 der Kanal-Elektrodosenkombination. Wenn der Anschlußteil 20 der Kanal-Elektrodosenkombination und alle Kanal-Steckdosen 80 installiert sind, werden an den Kopfseiten der Kanal-Elektrodosenkombination, an dem einen Ende an den Befestigungsorganen 90 der Kanal-Steckdose und dem anderen Ende an den Befestigungsorganen 50 des Anschlußteils die Kopfleisten 110 angebracht, die somit die von den Rändern der Kanal-Steckdosen gebildeten Flanken der Abdeckung zu einem lückenlosen und ästhetischen Ganzen vervollständigen. Damit die in der Fig. 3 dargestellte Kopfleiste 110 auch als Kopfteil der Abdeckung einer Kanal-Elektrodosenkombination gemäß diesem Beispiel, bestehend aus einem Anschlußteil 20 und den Kanal-Steckdosen 80,geeignet wäre, sind auch bei dieser Kanal-Elektrodosenkombination die mit den Befestigungsorganen 90 der Kopfleiste 110 verbundenen Abstände A, B und C die gleichen wie bei Kopfleiste 110 und die mit den Befestigungsorganen 50 verbundenen Abstände A', B' und C' die gleichen wie bei Kopfleiste 110.

Im folgenden wird genauer beschrieben, wie sich eine Abdeckung im allgemeinen für im Elektrokanal installierte Kanal-Elektrodosenkombination gemäß den Beispielen bilden läßt. Wenn eine Kanal-Elektrodose im Elektrokanal installiert ist, bilden die seitlichen Ränder des aus dem Elektrokanal hervorspringengen Teils der Kanal-Elektrodose, also der zum Elektrokanal parallele Randbereich 86 der Geräteblende 82 im Falle einer Kanal-Steckdose und der zum Elektrokanal parallele Rand 132 der Kanal-Einbaudose 130 oder der zum Elektrokanal parallele Rand eines/einer im Kanal-Steckdose installierten Installationsgeräts/Vorrichtung oder der Schutzdose ihren Anteil von der Flanke der Abdeckung in denjenigen Fällen, wo im Elektrokanal installierte Einbaudosen als Teil einer Kanal-Elektrodose benutzt werden. Wenn sämtliche Teile der Kanal-Elektrodosenkombination fertig installiert sind, werden an den Kopfseiten der Kanal-Elektrodosenkombination, entweder an der Kanal-Elektrodose oder dem Anschlußteil befestigt oder als getrennte Teile die Kopfleisten installiert, die somit die von den Rändern der Kanal-Elektrodosen gebildeten Flanken der Abdeckung zu einem lückenlosen und ästhetischen Ganzen vervollständigen.

Die Stirnseite der Abdeckung läßt sich aus unterschiedlichen Kopfleisten bilden, die sich an den Stirnseiten der Kanal-Elektroinstallationsgruppe befinden. Im folgenden werden einige alternative Kopfleisten dargestellt. Eine Kopfleiste weist z.B. geeignete Befestigungsorgane zur Befestigung der selben an der Stirnseite von Frontplatte 12, wobei bei fertig installierter Kanal-Elektrodosenkombination im Elektrokanal 10 zuletzt die Frontplatten 12 angebracht werden, an deren an die Kanal-Elektrodosenkombination anschließenden Stirnseiten die Kopfleisten befestigt sind. Dabei wird durch die von den Flanken der Abdeckung, also von den Rändern der Kanal-Elektrodosen und an den Frontplatten 12 befestigten Kopfleisten gebildete Abdeckung ein lückenloses Ganzes gebildet. Die Kopfleiste hat wahlweise z.B. passende Befestigungsorgane zur Befestigung derselben am Elektrokanal, wobei bei fertig installierter Kanal-Elektrodosenkombination im Elektrokanal 10 die Kopfleiste an der Stirnseite der Kanal-Elektrodosenkombination, am Elektrokanal 10 befestigt wird. Dabei wird ein lückenloses Ganzes durch die von den Flanken der Abdeckplatte, also von den Rändern der Kanal-Elektrodosen und im Elektrokanal 10 befestigten Kopfleisten gebildete Abdeckung gebildet, wonach die Frontplatten 12 angebracht werden können. Die Kopfleisten lassen sich ohne Werkzeug mit als solche bekannten, vorzugsweise männlichen Befestigungsorganen anbringen.

Um eine saubere Abdeckung 108 zu erhalten, setzt es natürlich voraus, daß alle Kanal-Elektrodosen 80, 130 und der eventuelle Anschlußteil 20 so installiert sind, daß sie dicht aneinander im Elektrokanal gehalten werden, damit keine unästhetischen Lücken in der Abdeckung enstehen. Dieser Anforderung kann wiederum auf mehreren verschiedenen Weisen entsprochen werden, wie bei den angeführten Beispielen veranschaulicht worden ist. Die Kanal-Elektrodosen etwa weisen passende Organe zu deren mechanischer Kuppelung aneinander auf, wobei zwischen den Kanal-Elektrodosen keine störenden Lücken entstehen können. An den einwärts gebogenen Rändern des Elektrokanals 10 sind z.B. Haltenuten 14 vorgesehen. An den Teilen der Kanal-Elektrodosenkombination ist entsprechend ein Halteglied 48 angeordnet, das in eine der genannten Haltenuten eingreift und damit verhindert, daß sich die betreffende Kanal-Elektrodose oder der Anschlußteil und die übrigen damit gekuppelten Kanal-Elektrodosen im Elektrokanal, in dessen Längserstreckung bewegen.

Die Kanal-Elektrodosen einer Kanal-Elektrodosenkombination brauchen nicht unbedingt mechanisch miteinander gekuppelt zu werden. Es genügt, daß sie auf die eine oder andere Weise lückenlos aneinander gehalten werden. Die an den Stirnseiten der Kanal-Elektrodosenkombination anzubringenden Kopfleisten sind von der Form her identisch. Lediglich die bei den Elektrodosen verwendeten verschiedenen Farbalternativen haben Unterschiede im Aussehen der Kopfleisten zur Folge. Die einerseits durch getrennte Kopfleisten und anderseits durch die Flanken der Kanal-Elektrodosen gemeinsam gebildete Abdeckung läßt sich mühelos und sauber installieren, benötigt wenig Teile und bietet eine sehr kostengünstige Weise, verschiedene Abdeckungsalternativenzu bilden.

Die Abdeckung einer Kanal-Elektrodosenkombination, bei der als Kanal-Elektrodosen Kanal-Steckdosen oder Kanal-Einbaudosen gemäß dem Beispiel eingesetzt sind, ist natürlich nur eine der erfindungsgemäßen Ausführungsformen. Wie bereits beschrieben wurde, versteht man unter Elektrodose zahlreiche alternative, im Elektrokanal oder an der Wand installierbare Elektrogeräte, wie etwa Kanal-Steckdosen, diverse in Kanal-Elektrodosen oder Wanddosen angeordnete Installationseräte und Vorrichtungen, wie Steckdosen, Anschlußklemmen für Tele-, Telefon- und Datenübertragungsverbindungen und anderes Elektrozubehör dieser Art. Die im Elektrokanal installierte Elektroausstattung wird unter der Bezeichnung Kanal-Elektrodosen zusammengefaßt, wie früher bereits angeführt wurde.

Bei der oben beschriebenen Erfindung handelt es sich um eine Lösung für installationstechnische Probleme in hinsicht auf die derzeitigen Elektrokanäle. Die Erfindung bietet auch völlig neue, vielseitige Alternativen zur Installation von Abdekkungen für verschiedene in Wänden oder Elektrokanälen befindliche Kanal-Elektrodosenkombinationen, und zwar so, daß das Endergebnis hinsichtlich der Fertigungs- und Installationskosten günstig und ästhetisch brauchbar ist. Obwohl oben nur einige vorteilhafte Ausführungsformen der Erfindung detailliert beschrieben sind, läßt sich die Erfindung im Rahmen des durch die Patentansprüche festgelegten Erfindungsgedanken anwenden.

## Patentansprüche

1. Außenabdeckung für eine an einer Wand oder in einem Elektrokanal (10) mechanisch fixierte Elektrodose (130), wie etwa einer Einbaudose, Steckdose oder d.gl. oder für eine aus diesen zusammengesetzte Elektrodosenkombination, wobei als Flanken der Außenabdeckung (108) der von der Elektrodose oder von den Rändern (86; 132) der benachbarten Elektrodosen gebildete Rand dient und als Stirnseiten der Außenabdeckung (108) zwei getrennte Kopfleisten (110) dienen, die sich mit geeigneten Befestigungsorganen an den Kopfseiten der Elektrodosenkombination anbringen lassen.

2. Außenabdeckung gemäß Anspruch 1 für eine Elektrodosenkombination, dadurch **gekennzeichnet**, daß die Kopfleisten (110) der Außenabdeckung (108) passende Befestigungsorgane zu deren Befestigung ohne Werkzeug an den Stirnseiten der Elektrodosenkombination aufweisen.

3. Außenabdeckung gemäß Anspruch 2 für eine Elektrodosenkombination,dadurch **gekennzeichnet**, daß die Kopfleisten (110) der Außenabdeckung (108) passende Befestigungsorgane (112), (50;90;134;136) für deren Befestigung ohne Werkzeug an den Stirnseiten der äußersten Teile der Elektrodosenkombination aufweisen.

4. Außenabdeckung gemäß Anspruch 1, 2 oder 3 für eine Elektrodosenkombination,dadurch **gekennzeichnet** , daß die Kopfleisten der Außenabdeckung (110) identisch sind.

5. Außenabdeckung gemäß einem der Ansprüche 1 bis 4 für eine Elektrodosenkombination,dadurch **gekennzeichnet** , daß die stirnseitigen Teile der Außenabdeckung männliche Befestigungsorgane (112) aufweisen.

## Claims

1. Outer cover for an electricity socket (130) fixed mechanically on a wall or in an electricity duct (10), such as possibly a built-in socket, plug socket or the like or for an electrical socket combination composed of the latter, wherein the edge formed by the electrical socket or by the edges (86; 132) of the neighbouring electrical sockets serves as flank of the outer cover (108) and two separated head ends (110) serve as end faces of the outer cover (108), which head ends can be attached to the ends of the electrical socket combination by suitable fastening elements.

2. Outer cover according to claim 1 for an electrical socket combination, characterised in that the head ends (110) of the outer cover (108) comprise fitting fastening elements for their fastening without a tool at the end faces of the electrical socket combination.

3. Outer cover according to claim 2 for an electrical socket combination, characterised in that the head ends (110) of the outer cover (108) comprise fitting fastening elements (112), (50; 90; 134; 136) for their fastening without a tool at the end faces of the outermost parts of the electrical socket combination.

4. Outer cover according to claim 1, 2 or 3 for an electrical socket combination, characterised in that the head ends of the outer cover (110) are identical.

5. Outer cover according to one of the claims 1 to 4 for an electrical socket combination, characterised in that the end-face parts of the outer cover comprise male fastening elements (112).

## Revendications

1. Couverture extérieure pour une prise électrique (130) fixée mécaniquement à une paroi ou dans un conduit (10) pour câbles électriques, comme par exemple une prise à encastrer, une fiche de prise de courant ou similaires, ou pour une combinaison de prises électriques constituée de l'assemblage de celles-ci, dans laquelle le bord formé par la prise électrique ou par les bords (86; 132) des prises électriques voisines sert de flanc pour la couverture extérieure (108), et deux réglettes de face séparées (110), qui peuvent être installées par des organes de fixation appropriés sur les côtés supérieurs de la combinaison de prises électriques, servent de côtés frontaux pour le couverture extérieure (108).

2. Couverture extérieure selon la revendication 1, pour une combinaison de prises électriques, caractérisée en ce que les réglettes de face (110) de la couverture extérieure (108) présentent des organes de fixation adaptés, pour leur fixation sans outil aux côtés frontaux de la combinaison de prises électriques.

3. Couverture extérieure selon la revendication 2, pour une combinaison de prises électriques, caractérisé en ce que les réglettes de face (110) de la couverture extérieure (108) présentent des organes de fixation adaptés (112), (50; 90; 134; 136) pour leur fixation sans outil aux côtés frontaux des parties les plus extérieures de la combinaison de prises électriques.

4. Couverture extérieure selon la revendication 1, 2 ou 3, pour une combinaison de prises électriques, caractérisée en ce que les réglettes de face de la couverture extérieure (110) sont identiques.

5. Couverture extérieure selon l'une des revendications 1 à 4, pour une combinaison de prises électriques, caractérisée en ce que les parties frontales de la couverture extérieure présentent deux organes de fixation mâles (112).
